# EUROPEAN PATENT SPECIFICATION

(11) **EP 0 928 373 B1**
(45) Date of publication and mention of the grant of the patent: **07.06.2000**
(21) Application number: 97943047.7
(22) Date of filing: 19.09.1997
(51) Int. Cl.: F16C 39/06

(54) **ELECTROMAGNETIC SUSPENSION APPARATUS AND METHOD OF CONTROLLING THE SAME**
ELEKTROMAGNETISCHES AUFHÄNGUNGSGERÄT UND VERFAHREN ZU DESSEN STEUERUNG
DISPOSITIF DE SUSPENSION ELECTROMAGNETIQUE ET PROCEDE DE COMMANDE ASSOCIE

(30) Priority: 24.09.1996 GB 9619854
(43) Date of publication of application: 14.07.1999
(73) Proprietor: British Nuclear Fuels PLC, Risley Warrington Cheshire, WA3 6AS (GB)
(72) Inventor: WHORLOW, Raymond John, University of Sussex, Brighton, East Sussex BN1 9QT (GB)
(74) Representative: Vinsome, Rex Martin
(86) International application number: GB9702573
(87) International publication number: WO9813612

(56) References cited:
- EP-A- 0 054 617
- EP-A- 0 549 911
- EP-A- 0 549 912
- DE-A- 2 848 173
- GB-A- 2 221 035
- US-A- 3 428 371
- US-A- 5 543 673
- SALAZAR ET AL.: "A MAGNETIC BEARING SYSTEM USING CAPACITIVE SENSORS FOR POSITION MEASUREMENT" IEEE - TRANSACTIONS ON MAGNETICS, vol. 26, no. 5, September 1990, NEW - YORK,US, pages 2541-2543, XP000150554

## Description

The present invention relates to electromagnetic suspension systems and relates particularly, but not exclusively, to transducerless electromagnetic suspension systems.

Electromagnetic control of the position of an object by suspension or levitation has been employed in a number of commercial applications in the field of industrial engineering. Such applications have included passenger carrying vehicles, conveyor systems, flow meters, frictionless bearings, tool spindles, centrifuges, alternators, pumps, compressors and balances.

From US-A-3 428 371 and EP-A-0 054 617 and the article "A Magnetic Bearing System Using Capacitive Sensors for Position Measurement", A. Salazar et al., IEEE-Transactions on Magnetics, vol. 26, no.5, Sept. 1990, New-York, p. 2541 - 2543 electromagnetic suspension apparatuses are known comprising
electromagnets with at least one coil for applying suspension forces to a rotor when electrical power is applied to the or each coil;
energising means for enabling electrical power to be applied to the coils; and
control means responsive in use to a change in capacitance of capacitive sensors resulting from a change in suspension gap between said electromagnets and the rotor, wherein the control means in use produces an output signal to control said energising means to oppose the change in suspension gap.

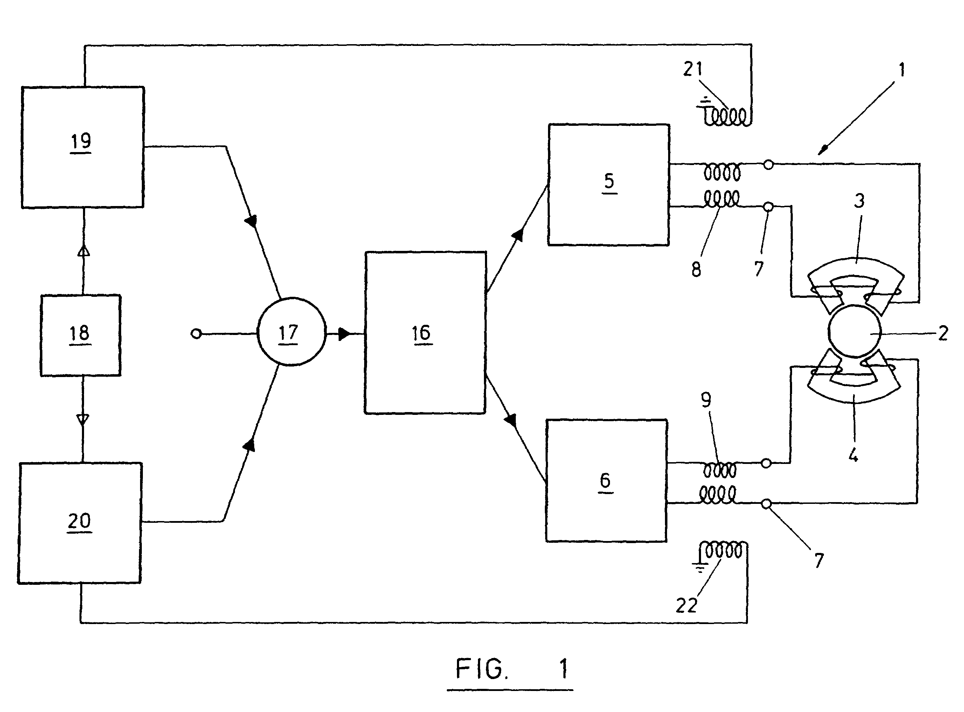

In US-A-3 428 371 the capacitive displacement sensors 91, 92, 93, 94 (figures 9 to 11) are located at D in figure 1 and axially distanced from the electromagnets located at F in figure 1.

In EP-A-0 054 617 the sensors 48, 50 are located axially in the vicinity of the electromagnets 10,12,14, 16.

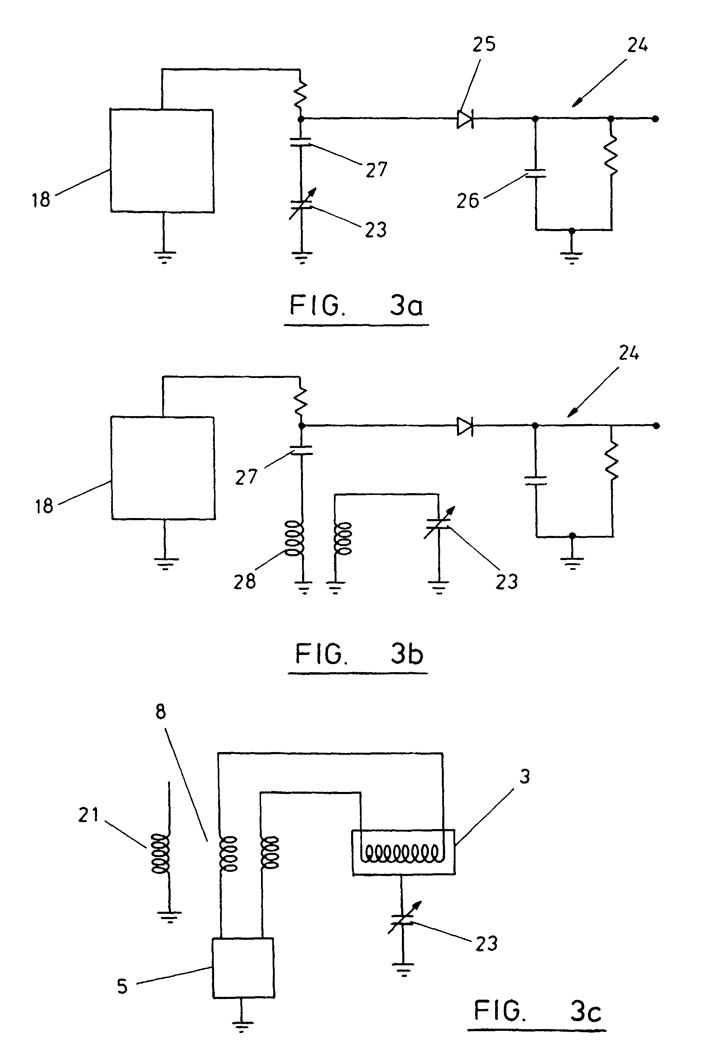

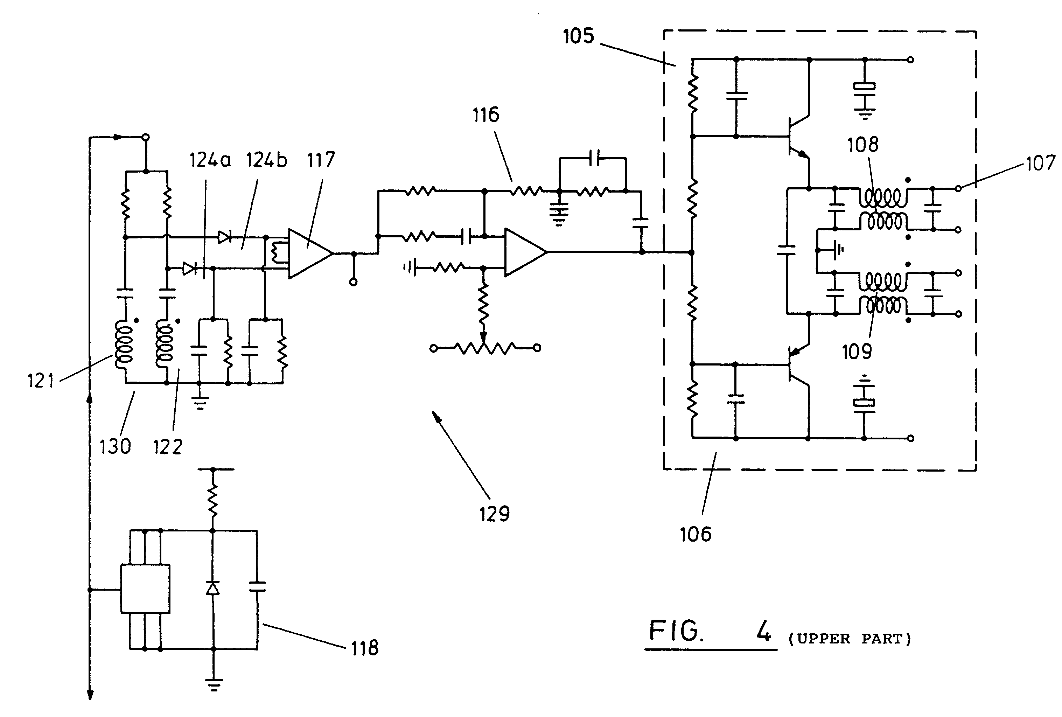

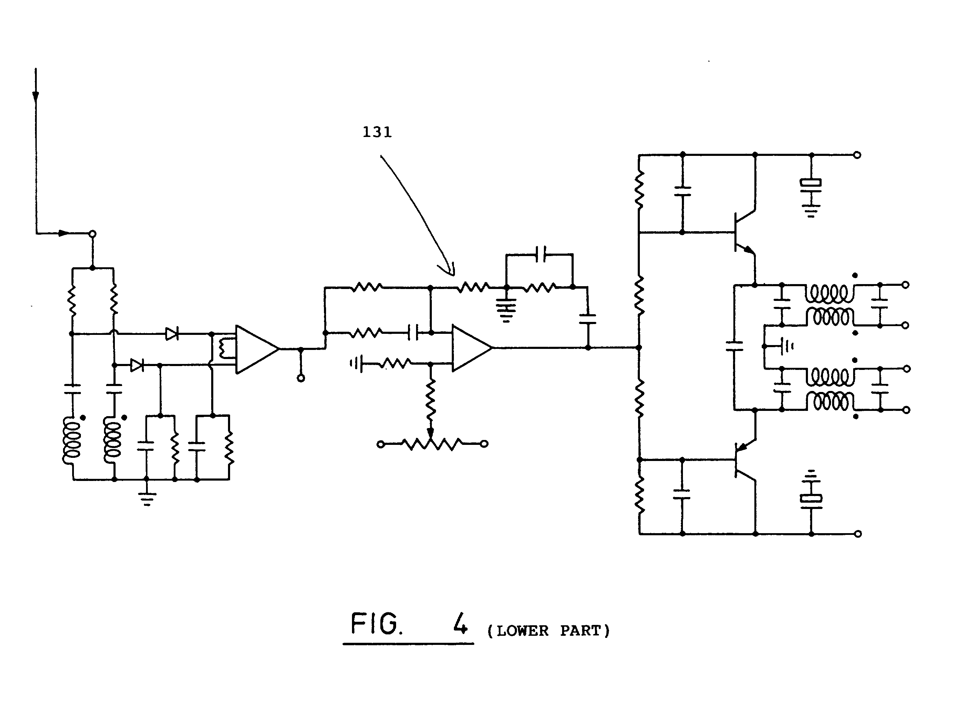

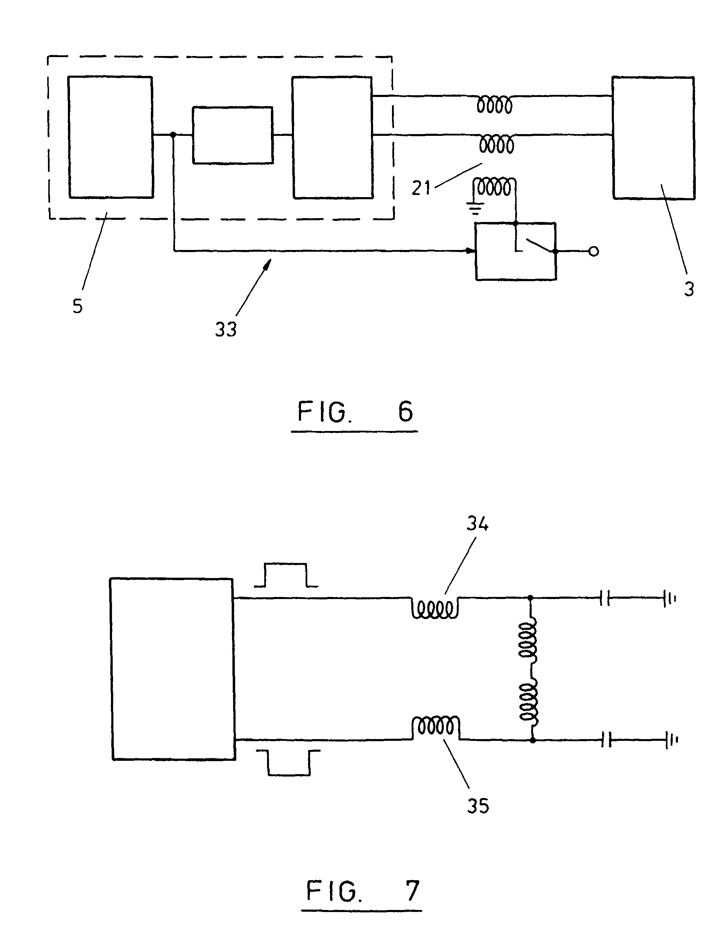

In the article from A. Salazar et al. the sensors are located in the air gap between the rotor and the electromagnets. (cf. fig. 1 and 3 and p. 2542).

Transducerless suspension systems are desirable since dedicated position measuring transducers occupy valuable space in the suspension apparatus which could otherwise be used as space for the electromagnet coils or laminations. Also, such transducers are often not suitable for withstanding the high temperatures which could otherwise be withstood by the electromagnets while in use.

Transducerless suspension systems are known which rely upon the variation in the inductance of the electromagnet coil with suspension gap between the electromagnet and the object to be suspended. An apparatus for controlling such an electromagnet is disclosed in European patent application no. 0549911.

Such existing systems suffer from the disadvantage that the inverse proportionality relationship between coil inductance and suspension gap is only true when the magnetic flux density in the electromagnet is below about 1 tesla. Above that value, the reluctance of the iron path in the electromagnet core increases causing a reduction in the inductance, which in turn can be incorrectly interpreted as a change in suspension gap.

Furthermore, inductance based transducerless systems require both the electromagnet core and its reaction piece (i.e. the object to be suspended) to be laminated, which is difficult to implement in the case of axial bearings.

Preferred embodiments of the present invention seek to overcome the above disadvantages of the prior art.

According to an aspect of the present invention there is provided an electromagnetic suspension apparatus comprising:
at least one electromagnet, the or each electromagnet comprising at least one coil for applying suspension forces to an object to be suspended when electrical power is applied to the or each coil;
energising means for enabling electrical power to be applied to the or each said coil; and
control means responsive in use to a change in capacitance of the or each said electromagnet resulting from a change in suspension gap between said electromagnet and the object to be suspended, wherein the control means in use produces an output signal to control said energising means to oppose the change in suspension gap.

By using the change of capacitance of an electromagnet resulting from a change in suspension gap, for example the part of the capacitance to earth of a coil of the electromagnet to the object to be suspended, this has the advantage of not being subject to error due to saturation at higher flux densities, and enables the apparatus to work equally well with solid (i.e. not laminated) electromagnet cores and objects.

Preferably, the control means comprises detector means for applying an AC signal to said at least one electromagnet and providing an output signal dependent upon the electrical capacitive impedance of said electromagnet to earth.

This has the advantage of enabling the electromagnet to be constructed as a transducerless system having only two connecting wires to said at least one electromagnet.

The detector means may comprise a voltage peak level detector associated with said at least one electromagnet.

The apparatus preferably comprises a plurality of said electromagnets, wherein at least a component of the suspension forces produced by at least two said electromagnets are mutually opposing in use.

In a preferred embodiment, the apparatus comprises at least one pair of said electromagnets producing substantially mutually opposing suspension forces in use, wherein each said pair of electromagnets is associated with a said detector means for providing a said output signal dependent upon the electrical capacitive impedance to earth of each of the electromagnets of said pair, and said control means is responsive to the difference between said output signals.

This has the advantage of enabling the detector to utilise the principle of an electrical bridge circuit, thus enhancing the sensitivity of the apparatus, and improving linearity and temperature stability.

The apparatus may comprise a plurality of said pairs of electromagnets, and oscillator means for causing each said detector means to apply an AC signal to the electromagnets of the associated pair.

This enables the detectors to be driven by a single oscillator, which in turn enables the apparatus to be constructed in a particularly compact manner.

In a preferred embodiment, the detector means comprises a first inductor and applies said AC signal to said at least one electromagnet by mutual inductance between said first inductor and at least one second inductor connected in series with the or each coil of the electromagnet.

Preferably, said at least one electromagnet comprises a said second inductor connected in series with each terminal of the electromagnet.

When the electromagnet coil(s) is(are) connected to the control means, the output impedance of the control means appears in parallel with the coil capacitance. As a result, the output impedance of the control means must be much higher than the impedance of the coil capacitance, and providing an inductor in series with each output connection of the electromagnet enables this to be achieved.

The said second inductors may advantageously be wound on a common core.

This provides the advantage that by suitable construction of the inductors, which carry equal and opposite currents between the control means and the electromagnet coils, the absence of net current flow through the dual wound inductor avoids the problem of magnetic saturation in the inductor.

In a preferred embodiment, the apparatus includes at least one class D amplifier.

This provides the advantage of reducing power consumption of the apparatus compared with apparatus using other classes of amplifier.

The apparatus may further comprise low pass filter means connected between the control means and said at least one electromagnet.

This has the advantage of suppressing the effect on the detector means of oscillation resulting from the switching edges of the output voltages of the or each class D amplifier.

Alternatively, or in addition, the apparatus may comprise a blanking circuit connected between the control means and said at least one electromagnet for suppressing the effect on the detector means of oscillation resulting from the switching edges of the output voltages of the or each class D amplifier.

Alternatively, the detector means may be responsive to variation in said class D oscillation resulting from changes in capacitance of said at least one electromagnet.

In a preferred embodiment, the apparatus further comprises at least one electrically conductive member connected to a coil of said at least one electromagnet.

By suitable choice of conductive member, such as a metal plate facing the object to be suspended, this has the advantage of enabling increased sensitivity of capacitance to variation in suspension gap to be achieved.

The control means may further comprise a proportional / integral / differential control circuit for supplying an output voltage to control the energising means.

According to another aspect of the invention, there is provided a method of controlling suspension gap in an electromagnetic suspension apparatus, the method comprising:
detecting a change in capacitance to earth of at least one electromagnet of the apparatus resulting from a change in suspension gap between the electromagnet and an object to be suspended; and
controlling energising means in response to said detection to oppose the change in suspension gap.

In a preferred embodiment, said detection step comprises applying an AC signal to at least one said electromagnet and providing an output signal dependent upon the electrical capacitive impedance to earth of the electromagnet.

As an aid to understanding of the invention, preferred embodiments thereof will now be described, by way of example only and not in any limitative sense, with reference to the accompanying drawings, in which:
Figure 1 is a schematic view of an electromagnetic suspension apparatus of a first embodiment of the present invention;
Figure 2 is a schematic representation of an electromagnet of the embodiment of Figure 1;
Figures 3a, 3b and 3c are schematic illustrations of the principle of operation of the detector circuits of the embodiment of Figure 1;
Figure 4, depicted as upper part and lower part on two sheets, is a circuit diagram of a combined detector, control and energising arrangement for use in the embodiment of Figure 1;
Figure 5 is a schematic illustration of the principle of operation of a suspension apparatus of a second embodiment of the invention;
Figure 6 is a schematic representation, corresponding to Figure 5, of the operation of a third embodiment of the invention;
Figure 7 is a schematic illustration, corresponding to Figures 5 and 6, of the operation of a fourth embodiment of the invention; and
Figure 8 is a schematic representation of a modification of the embodiments of Figures 5 to 7.

Referring to Figure 1, a transducerless electromagnetic suspension system 1 for suspending a rotor 2 includes a pair of oppositely arranged electromagnets 3, 4 for controlling vertical movement of the rotor 2, and a similar pair of opposing electromagnets arranged on opposite sides of the rotor 2 for controlling horizontal movement of the rotor 2 (but not shown in Figure 1 for purposes of clarity). DC electrical power is supplied to the electromagnets 3, 4 by means of amplifiers 5, 6 having outputs respectively connected to pairs of terminals 7 of the electromagnets 3, 4 via pairs of inductors 8, 9, the purpose of which will be described in detail below. Adjustment of the output of amplifiers 5, 6 adjusts mutually opposing attractive forces exerted on the rotor 2 by the electromagnets 3,4. This in turn varies the small separation maintained between rotor 2 and electromagnets 3, 4, to control the vertical position of rotor 2 as shown in the figure.

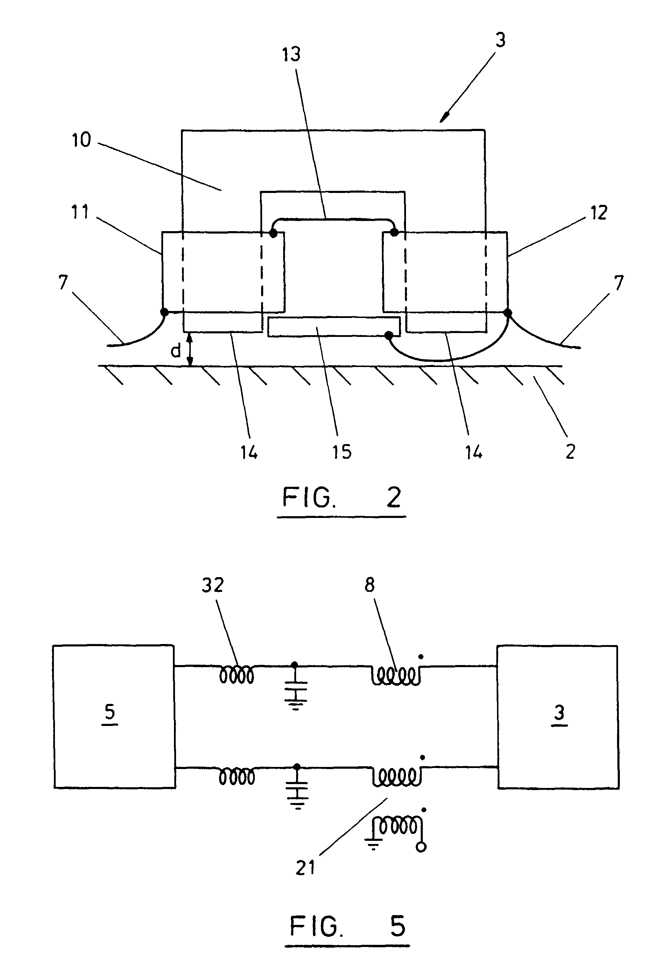

Figure 2 illustrates the upper electromagnet 3 of Figure 1, although it will be appreciated by persons skilled in the art that the lower electromagnet 4 is of similar construction. The electromagnet 3 comprises a horseshoe-shaped iron core 10, the limbs of which are surrounded by respective electromagnetic coils 11, 12 whose inner ends as shown in the figure are connected together by means of a connection 13 and the outer ends of which are connected via terminals 7 to output terminals of the amplifier 5. In this way, magnetic flux is generated in the core 10 when the coils 11,12 are energised, and the magnetic flux crosses the air gap from pole regions 14 to the rotor 2.

The coils 11, 12 of the electromagnet 3 have capacitance to earth, some of which is to the core 10 and some of which is to the rotor 2 to be suspended. The latter component of capacitance varies with suspension gap d between the magnet 3 and rotor 2, and can therefore be utilised as a measure of suspension gap d. A metal plate 15 is connected to the outer end of coil 12 and is arranged between the pole regions 14 facing the rotor 2. This increases the sensitivity of variation of the capacitance to earth between the electromagnet 3 and rotor 2 with suspension gap d.

Referring again to Figure 1, when the electromagnets 3, 4 are connected to the output terminals of amplifiers 5, 6 respectively, the output impedance of each amplifier 5, 6 appears in parallel with the capacitance to earth of the coils of the corresponding electromagnet 3, 4 and must therefore be much higher than the impedance due to the capacitance to earth of the coils. Accordingly, pairs of inductors 8, 9 are provided in series with the terminals 7 of the electromagnets 3, 4 respectively to provide high frequency isolation between the coils of the electromagnets 3, 4 and the amplifiers 5, 6. The individual inductors of pair 8 are wound on a common core, and because these inductors carry equal and opposite currents between the corresponding amplifier 5 and electromagnet 3, by suitable construction of the bifilar inductor 8, there is no net current flow through the bifilar inductor pair 8, and therefore magnetic saturation of inductor 8 does not arise. It will be appreciated by persons skilled in the art that bifilar inductor 9 operates in an identical manner.

The amplifiers 5, 6 are controlled by means of a proportional / integral / differential (PID) control system 16 which receives an input signal from an error amplifier 17, the input signal representing the position of the rotor 2 relative to the electromagnets 3, 4. The PID control system 16 in turn provides an input signal to each amplifier 5,6 to control the vertical position of the rotor 2 as shown in Figure 2. The operation of a PID control system is described in detail in European patent application no. 0549912.

A 2MHz oscillator 18 provides a high frequency AC signal to upper an lower capacitance detector circuits 19, 20, respectively, each of which is connected to a respective inductor 21, 22 wound on the same core as the corresponding bifilar inductor 8, 9 so that inductors 21,22 are inductively coupled to bifilar inductors 8,9 respectively. The upper detector circuit 19 provides an output signal representing the gap between rotor 2 and electromagnet 3 to an inverting input of the error amplifier 17, and the lower detector circuit 20 provides a similar input signal representing the gap between rotor 2 and electromagnet 4 to the non-inverting input of the error amplifier 17. As a result, the output signal from the error amplifier 17 is dependent upon the difference between the two input signals, and so the input signal to the PID control system 16 represents the displacement of the rotor 2 from its desired position between the electromagnets 3,4. The error amplifier 17 also has a further input terminal to enable the equilibrium position of the rotor 2 to be adjusted.

The principle of operation of the detector circuits 19,20 of the apparatus 1 of Figure 1 will now be described with reference to Figures 3a to 3c. As will be appreciated by persons skilled in the art, when a high frequency current signal is supplied to a capacitance, the voltage across the capacitance provides a measure of that capacitance. In particular, Figure 3a shows an arrangement for producing an output signal dependent upon the capacitance C_{P} of a variable capacitor 23 connected in series with a larger capacitor 27. A 2MHz oscillator 18, as in the arrangement of Figure 1, provides a high frequency alternating current signal via a resistor to the capacitors 27, 23 and the peak output voltage across the pair of capacitors 23, 27 is measured by means of a peak level detector 24 comprising a diode 25 and a capacitor 26. Because the capacitance of variable capacitor C_{P} is small compared with that of capacitor 27 the bulk of the output voltage fed to diode 25 represents the voltage across capacitor 23 and so the output voltage detected by peak level detector 24 can be used as a measure of the impedance of capacitor 23 when supplied with an AC signal from the oscillator 18 in that the output voltage increases as C_{P} decreases.

Referring to Figure 3b, the variable capacitor 23 is now connected in series with the larger capacitor 27 via a 1:1 transformer 28. As far as high frequency AC signals are concerned, the circuit is equivalent to that of Figure 3a, i.e. it behaves as though the variable capacitor 23 were connected directly in series with the larger capacitor 27 and so the output voltage of peak detector 24 still provides a measure of the capacitance C_{P} of the variable capacitor 23.

Referring now to Figure 3c, in which components of Figure 3b are replaced by elements of the apparatus of Figure 1, it can be seen that the capacitance to earth of the electromagnet 3 of Figure 1, which varies with the suspension gap between the electromagnet 3 and rotor 2, can be represented by a variable capacitor 23. Similarly, the 1:1 transformer 28 of Figure 3b is now replaced by a transformer of which the primary winding comprises the inductor 21 connected to the detector circuit 19, and of which the secondary winding comprises the bifilar inductor 8 (i.e. the pair of inductors 8) in series with respective terminals 7 of the electromagnet 3. The output of the amplifier 5 acts as a low impedance signal path between the bifilar inductor 8 and earth. It can therefore be seen from Figures 1 and 3c that when a high frequency AC signal is supplied from oscillator 18 via detector circuit 19 to inductor 21, an AC signal is induced in inductors 8 and flows in the capacitance to earth of the coils of the electromagnet 3. In addition, the output signal of the peak level detector 24 (not shown in Figure 1) contained within the detector circuit 19 is a measure of the capacitive impedance to earth of the electromagnet 3, which in turn depends upon the variable capacitance between the electromagnet and earth which varies with the suspension gap d between the electromagnet 3 and rotor 2. Accordingly, when the rotor 2 is displaced vertically downwards as shown in Figure 1, the capacitance of the upper electromagnet 3 decreases and that of the lower electromagnet 4 increases. As a result, the output signal from the upper detector circuit 19 increases and the output signal from the lower detector circuit 20 decreases, in response to which the PID control system 16 controls amplifier 5 to increase drive to the upper magnet 3 and controls amplifier 6 to reduce drive to the lower magnet 4. In this way, the electromagnets 3, 4 tend to pull the rotor 2 back to its original position. It will be appreciated by persons skilled in the art that a similar pair of oppositely arranged electromagnets can control horizontal displacement of the rotor 2 by means of similar detection and control circuitry.

Figure 4 shows a detailed embodiment of detection, control and energising circuitry for use in such a four electromagnet arrangement, and parts common to the embodiment of Figures 1 to 3 are denoted by like reference numerals but increased by 100.

An upper portion 129 of the circuit shown in Figure 4 controls vertical movement of the rotor 2 via electromagnets 3, 4 (not shown) and comprises an amplifier 105 which supplies current via bifilar inductor 108 to terminals 107 of electromagnet 3, and an amplifier 106 which supplies current via bifilar inductor 109 to terminals 107 of oppositely arranged electromagnet 4. The amplifiers 105,106 are controlled via a common input terminal.

A vertical movement detection circuit 130 comprises an inductor 121, wound on the same core as bifilar inductor 108, and an inductor 122, wound on the same core as bifilar inductor 109, such that the inductors 121, 122 are arranged in respective limbs of a bridge circuit, each of which is connected via a corresponding peak level detector 124a, 124b to an input terminal of error amplifier 117. The output of error amplifier 117 is supplied via a PID control system 116 to the amplifiers 105, 106. The limbs of the bridge circuit contain equal resistances and capacitances, large compared with the capacitance to earth of the electromagnet in an arrangement corresponding to that of Figures 3a to 3c. It will therefore be appreciated that the inverting and non-inverting inputs of error amplifier 117 will be equal when the impedances in the limbs of the bridge circuit are equal, and so no output signal will be generated by the error amplifier 117.

Displacement of the rotor 2 in the vertical direction causes an increase of capacitance of one electromagnet and a decrease in capacitance of the other. This in turn causes a difference in the impedance of respective limbs of the bridge circuit containing the inductors 121, 122 which causes the peak level detectors 124a,124b to supply differing input signals to the error amplifier 117 which then supplies a single output signal via PID control system 116 to the amplifiers 105, 106, driving the electromagnets 3,4 to reverse the vertical displacement of the rotor. It can be seen that the lower portion 131 of the circuit operates in an identical manner to control horizontal displacement of the rotor 2, and that both upper 129 and lower 131 portions of the circuit are driven by a single 2MHz oscillator 118. In this way, the efficient use of components can be maximised which enables compact construction of the apparatus.

It will be noted that the circuit of Figure 4 also differs from the arrangement of Figure 1 in that the adjustment of the equilibrium position of the rotor 2 is now achieved via adjustment of an offset at an input terminal of the PID control system 116 as opposed to an input of the error amplifier 117.

The embodiments of Figures 1 to 4 have been described with reference to class A amplifier systems. It will be appreciated by persons skilled in the art that the use of switching amplifier (class D) systems is advantageous because of lower overall power dissipation. However, the switching edges of the output voltages from a class D system can act in a similar manner to a high frequency signal and can therefore result in a burst of oscillation (ringing) which would appear on the inductances 21, 22 forming inputs to the detector circuits 19, 20 of the arrangement of Figure 1. Since this burst of oscillation may often be of greater amplitude than that of the signal produced by oscillator 18 and used to detect capacitance of the electromagnets 3, 4, it is often desirable to suppress the effects of such ringing.

Figure 5 shows an arrangement corresponding to that of Figure 1, but in which the electromagnets (only one of which is shown) are driven by class D amplifiers 5. The apparatus is modified by the connection of an L-C filter 32 in series with each terminal 7 of the electromagnet 3 via the bifilar inductor 8 which prevents the switching voltages from being applied to the bifilar inductor 8. The arrangement then acts in the same way as the class A arrangement of Figure 1.

Figure 6 shows an alternative embodiment to that shown in Figure 5, and in which the L-C filters 32 are replaced by a blanking circuit 33 which disconnects the output of inductor 21 from the detector circuit 19 during the period in which ringing occurs. It will be appreciated by person skilled in the art that the blanking circuit 33 begins its blanking period in advance of the switching edge of the class D amplifier 5, and achieves this by delaying the switch point of the class D device until blanking has started.

In a further embodiment, as illustrated with reference to Figure 7, the amplitude of the ringing signal varies with capacitance from the coil connection and metal plate 15 (as shown in Figure 2) to earth. The metal plate 15 is therefore connected to one end only of the respective electromagnet coil such that the class D system causes a difference in current in inductors 34, 35 as a result of the rising and falling of class D output voltages driving different capacitances at each end of the coil. The two inductors 34,35 are the windings of bifilar inductor 8 of Figure 1. The voltage appearing at inductor 21 results from this difference in current and the apparatus can be arranged to produce a predictable relationship between ringing amplitude and suspension gap d.

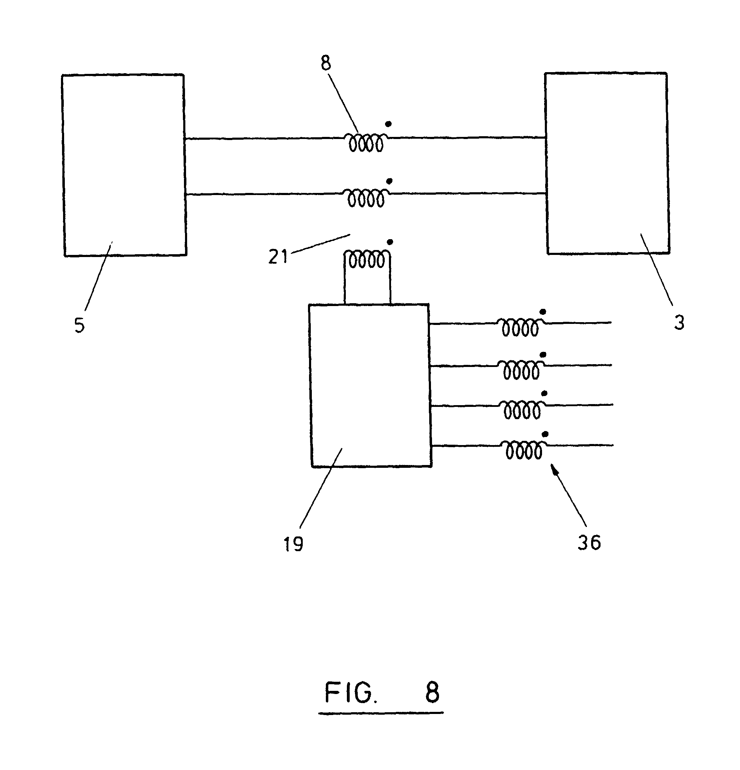

The detector circuit 19 connected to inductor 21 can also be affected by capacitive coupling between the bifilar inductor 8 and the inductor 21. Figure 8 shows an arrangement in which a multi-wound inductor 36 is included in the detector circuit 19 to isolate the detector circuit at high frequency and prevent capacitive currents from flowing.

It will be understood by persons skilled in the art that the above embodiments have been described by way of example only and not in any limitative sense, and that various alterations and modifications are possible without departure from the scope of the invention as defined by the appended claims. For example, the metal plate 15 shown in Figure 2 can be connected to one end only of the coil 11 or 12 of an electromagnet, or split into two and a part of the plate 15 connected to each terminal 7 of the coil. In the arrangement shown in Figure 7, however, the plate 15 is connected to one end only of the coil 11, 12 to cause a difference in the capacitances to earth of the coils 11, 12 of the electromagnet 3.

## Claims

1. An electromagnetic suspension apparatus (1) comprising:
at least one electromagnet (3, 4), the or each electromagnet (3, 4) comprising at least one coil (11, 12) for applying suspension forces to an object (2) to be suspended when electrical power is applied to the or each coil (11, 12);
energising means (5,6; 105, 106) for enabling electrical power to be applied to the or each said coil (11, 12); and
control means (16; 116) responsive in use to a change in capacitance of the or each said electromagnet (3, 4) resulting from a change in suspension gap (d) between said electromagnet (3, 4) and the object (2) to be suspended, wherein the control means (16; 116) in use produces an output signal to control said energising means (5,6; 105,106) to oppose the change in suspension gaps (d).

2. An apparatus according to claim 1, wherein the control means comprises detector means (18-22; 130) for applying an AC signal to the or each said electromagnet (3, 4) and providing an output signal dependent upon the electrical capacitive impedance of said electromagnet (3, 4) to earth.

3. An apparatus according to claim 2, wherein the detector means comprises a voltage peak level detector (24; 124a, 124b) associated with said at least one electromagnet (3, 4).

4. An apparatus according to claim 2 or 3, comprising a plurality of said electromagnets (3, 4), wherein at least a component of the suspension forces produced by at least two said electromagnets (3, 4) are mutually opposing in use.

5. An apparatus according to claim 4, further comprising at least one pair of said electromagnets (3, 4) producing substantially mutually opposing suspension forces in use, wherein each said pair of electromagnets (3, 4) is associated with a said detector means (18-22; 130) for providing a said output signal dependent upon the electrical capacitive impedance to earth of each of the electromagnets (3, 4) of said pair, and said control means is responsive to the difference between said output signals.

6. An apparatus according to claim 5, further comprising a plurality of said pairs of electromagnets, and oscillator means (118) for causing each said detector means (130) to apply an AC signal to the electromagnets of the associated pair.

7. An apparatus according to any one of claims 2 to 6, wherein the detector means comprises a first inductor (21, 22; 121, 122) and applies said AC signal to said at least one electromagnet (3, 4) by mutual inductance between said first inductor (21, 22; 121, 122) and at least one second inductor (8, 9; 108, 109) connected in series with the or each coil (11, 12) of the electromagnet (3, 4).

8. An apparatus according to claim 7, wherein said at least one electromagnet (3, 4) comprises a said second inductor (8, 9; 108, 109) connected in series with each terminal (7; 107) of the electromagnet (3, 4).

9. An apparatus according to claim 8, wherein said second inductors (8, 9; 108, 109) are wound on a common core.

10. An apparatus according to any one of claims 2 to 9, wherein the apparatus (1) includes at least one class D amplifier.

11. An apparatus according to claim 10, further comprising low pass filter means (32) connected between the control means and said at least one electromagnet (3).

12. An apparatus according to claim 10, further comprising a blanking circuit (33) connected between the control means and said at least one electromagnet (3) for suppressing the effect on the detector means of oscillation resulting from the switching edges of the output voltages of the or each class D amplifier.

13. An apparatus according to claim 10, wherein the detector means is responsive to variation in said class D oscillation resulting from changes in capacitance of said at least one electromagnet.

14. An apparatus according to any one of the preceding claims, further comprising at least one electrically conductive member (15) connected to a coil (12) of said at least one electromagnet (3).

15. An apparatus according to any one of the preceding claims, further comprising a proportional / integral / differential control circuit for supplying an output voltage to control the energising means.

16. A method of controlling suspension gap in an electromagnetic suspension apparatus (1), the method comprising:
detecting a change in capacitance to earth of at least one electromagnet (3, 4) of the apparatus resulting from a change in suspension gap (d) between the electromagnet (3, 4) and an object (2) to be suspended; and
controlling energising means (5, 6) in response to said detection to oppose the change in suspension gap (d).

17. A method according to claim 16, wherein said detection step comprises applying an AC signal to at least one said electromagnet (3, 4) and providing an output signal dependent upon the electrical capacitive impedance to earth of the electromagnet (3, 4).

## Patentansprüche

1. Elektromagnetische Lagerungsvorrichtung (1), enthaltend:
- zumindest einen Elektromagneten (3, 4), wobei der oder die Elektromagneten (3, 4) mindestens eine Spule (11, 12) zum Anlegen von Lagerkräften an ein Objekt (2) enthalten, welches gelagert ist, sobald elektrische Energie an der oder den Spulen (11, 12) anliegt,
- Erreger (5, 6; 105, 106), die das Anlegen elektrischer Energie an der oder den Spulen (11, 12) ermöglichen,
- Steuereinrichtungen (16, 116), die im Betrieb auf Änderungen der Kapazität des oder der Elektromagneten (3, 4) ansprechen, die sich aufgrund von Änderungen des Lagerspaltes (d) zwischen den Elektromagneten (3, 4) und dem zu lagernden Objekt (2) ergeben und die Steuereinrichtungen (16, 116) im Betrieb ein Ausgangssignal erzeugen, um die Erreger (5, 6; 105, 106) der Änderung des Lagerungsspaltes (d) entgegenwirkend anzusteuern.

2. Vorrichtung gemäß Anspruch 1,
dadurch gekennzeichnet, daß die Steuereinrichtungen Detektoren (18 - 22; 130) enthalten, die ein Wechselstromsignal an dem oder den Elektromagneten (3, 4) anlegen und die ein vom elektrischen, kapazitiven Scheinwiderstand des Elektromagneten (3, 4) zur Erdung abhängiges Ausgangssignal erzeugen.

3. Vorrichtung gemäß Anspruch 2, dadurch gekennzeichnet, daß die Detektoren einen Spannungsspitzen-Niveaudetektor (24; 124a, 124b) enthalten, der dem mindestens einen Elektromagneten (3, 4) zugeordnet ist.

4. Vorrichtung gemäß der Ansprüche 2 oder 3, dadurch gekennzeichnet, daß eine Vielzahl von Elektromagneten (3, 4) vorgesehen ist und im Betrieb mindestens eine Komponente der Lagerungskräfte von mindestens zwei Elektromagneten (3, 4) einander entgegengesetzt gerichtet ist.

5. Vorrichtung gemäß Anspruch 4, dadurch gekennzeichnet, daß zumindest eine paar Elektromagnete (3, 4) vorgesehen ist, das im Betrieb im wesentlichen einander entgegengesetzt gerichtete Lagerungskräfte erzeugt und jedes Paar Elektromagnete (3, 4) mit Detektoren (18 - 22, 130) in Verbindung steht, um das vom elektrischen, kapazitiven Scheinwiderstand jedes der Elektromagneten (3, 4) des Paares abhängige Ausgangssignal zu erzeugen und die Steuervorrichtungen auf die Differenz dieser Ausgangssignale ansprechen.

6. Vorrichtung gemäß Anspruch 5, dadurch gekennzeichnet, daß eine Vielzahl von Paaren von Elektromagneten (3, 4) vorgesehen ist sowie eine Oszillatoreinrichtung (118) zur Ansteuerung der Detektoren (130) derart, daß diese ein Wechselstromsignal an den Elektromagneten des mit diesen verbundenen Paares anlegen.

7. Vorrichtung gemäß einem oder mehrerer der Ansprüche 2 bis 6, dadurch gekennzeichnet, daß die Detektoren einen ersten Induktor (21, 22; 121, 122) enthalten, und daß Wechselstromsignale an den mindestens einen Elektromagneten (3, 4) durch gegenseitige Induktion zwischen dem ersten Induktor (21, 22; 121, 122) und mindestens einem weiteren Induktor (8, 9; 108, 109), der mit der oder den Spulen (11, 12) des Elektromagneten (3, 4) in Reihe geschaltet ist, anlegen.

8. Vorrichtung gemäß Anspruch 7, dadurch gekennzeichnet, daß der mindestens eine Elektromagnet (3, 4) einen zweiten Induktor (8, 9; 108, 109) enthält, der mit den Anschlußklemmen (7; 107) des Elektromagneten (3, 4) in Reihe geschaltet ist.

9. Vorrichtung gemäß Anspruch 8, dadurch gekennzeichnet, daß die zweiten Induktoren (8, 9; 108, 109) um einen gemeinsamen Kern gewickelt sind.

10. Vorrichtung gemäß einem oder mehrere der Ansprüche 2 bis 9, dadurch gekennzeichnet, daß die Lagerungseinrichtung (1) zumindest einen D-Klasse-Verstärker enthält.

11. Vorrichtung gemäß Anspruch 10, dadurch gekennzeichnet, daß zwischen den Steuereinrichtungen und den mindesten einen Elektromagneten (3, 4) Tiefpaßfilter (32) vorgesehen sind.

12. Vorrichtung gemäß Anspruch 10, dadurch gekennzeichnet, daß ein Unterdrückungskreis (33) zwischen den Steuereinrichtungen und den mindestens einen Elektromagneten (3, 4) geschaltet ist, um den Effekt von Schwingungen, die bei Schaltvorgängen der Ausgangsspannungen am D-Klasse-Verstärker auftreten, auf die Detektoren zu unterdrücken.

13. Vorrichtung gemäß Anspruch 10, dadurch gekennzeichnet, daß die Detektoren auf Änderungen D-Klasse-Oszillationen ansprechen, die aufgrund von Kapazitätsänderungen an dem zumindest einen Elektromagneten auftreten.

14. Vorrichtung gemäß einem oder mehrerer der vorhergehenden Ansprüche, dadurch gekennzeichnet, daß mindestens ein weiteres elektrisch leitendes Element (15) vorgesehen ist, welches mit der Spule (12) des mindestens einen Elektromagneten (3) verbunden ist.

15. Vorrichtung gemäß einem oder mehrerer der vorhergehenden Ansprüche, dadurch gekennzeichnet, daß ein proportional/integral/differenzierender Regelkreis zur Erzeugung einer Ausgangsspannung zur Steuerung der Erreger vorgesehen ist.

16. Verfahren zur Steuerung des Lagerungsspaltes an einer elektromagnetischen Lagerungsvorrichtung (1) mit folgenden Verfahrensschritten:
- der Ermittlung einer Änderung der Kapazität, bezogen auf die Erdung mindestens eines Elektromagneten (3, 4) der Vorrichtung, die aus einer Änderung des Lagerungsspaltes (d) zwischen den Elektromagneten (3, 4) und einem Objekt (2) resultiert, welches zu lagern ist und
- der Ansteuerung von Erregern (5, 6) aufgrund der Ermittlung der Änderungen, um der Änderung des Lagerungsspaltes (d) entgegenzuwirken.

17. Verfahren gemäß Anspruch 16, wobei der Schritt der Ermittlung das Anlegen eines Wechselstromsignales an mindestens einem Elektromagneten (3, 4) einschließt, sowie das Erzeugen eines Ausgangssignales, abhängig vom elektrischen, kapazitiven Scheinwiderstand am Elektromagneten (3, 4) zur Erdung.

## Revendications

1. Appareil de suspension électromagnétique (1), comprenant:
au moins un électro-aimant (3, 4), l'électro-aimant ou chaque électro-aimant (3, 4) comprenant au moins une bobine (11, 12), pour appliquer des forces de suspension à un objet (2) à suspendre, quand un courant électrique est appliqué à la ou à chaque bobine (11, 12);
des moyens de mise sous tension (5, 6; 105, 106) destinés à permettre l'application de courant électrique à ladite ou à chacune desdites bobine(s) (11, 12); et
des moyens de commande (16; 116) répondant, en utilisation, à une variation de la capacité dudit ou de chacun desdits électro-aimant(s) (3, 4) résultant d'une variation de l'entrefer de suspension (d) entre ledit électro-aimant (3, 4) et l'objet (2) à suspendre, les moyens de commande (16; 116) produisant, en utilisation, un signal de sortie de manière à commander les moyens de mise sous tension (5, 6; 105, 106) de façon à s'opposer à la variation de l'entrefer de suspension (d).

2. Appareil selon la revendication 1, dans lequel les moyens de commande comprennent des moyens détecteurs (18 à 22; 130) destinés à appliquer un signal de courant alternatif audit électro-aimant ou à chacun desdits électro-aimants (3, 4), et à produire un signal de sortie qui dépend de l'impédance électrique capacitive dudit électro-aimant (3, 4) à la terre.

3. Appareil selon la revendication 2, dans lequel les moyens détecteurs comprennent un détecteur (24; 124a, 124b) de crête de tension associé audit au moins un électro-aimant (3, 4).

4. Appareil selon la revendication 2 ou 3, comprenant plusieurs desdits électro-aimants (3, 4), où au moins une composante des forces de suspension produites par au moins deux desdits électro-aimants (3, 4) est constituée de forces antagonistes en utilisation.

5. Appareil selon la revendication 4, comprenant en outre au moins une paire desdits électro-aimants (3, 4) produisant, en utilisation, des forces de suspension globalement antagonistes, où chacune desdites paires d'électro-aimants (3, 4) est associée à l'un desdits moyens détecteurs (18 à 22; 130) en vue de fournir ledit signal de sortie dépendant de l'impédance électrique capacitive à la terre de chacun des électro-aimants (3, 4) de ladite paire, et où lesdits moyens de commande réagissent à la différence entre lesdits signaux de sortie.

6. Appareil selon la revendication 5, comprenant en outre plusieurs desdites paires d'électro-aimants, et des moyens oscillateurs (118) destinés à amener chacun desdits moyens détecteurs (130) à appliquer un signal de courant alternatif aux électro-aimants de la paire associée.

7. Appareil selon l'une quelconque des revendications 2 à 6, dans lequel les moyens détecteurs comprennent une première bobine d'inductance (21, 22; 121, 122) et appliquent un signal de courant alternatif audit au moins un électro-aimant (3, 4) par induction mutuelle entre ladite première bobine d'inductance (21, 22; 121, 122) et au moins une deuxième bobine d'inductance (8, 9; 108, 109) branchée en série avec la bobine ou chaque bobine (11, 12) des électro-aimants (3, 4).

8. Appareil selon la revendication 7, dans lequel ledit au moins un électro-aimant (3, 4) comprend une bobine d'inductance (8, 9; 108, 109) dite seconde branchée en série avec chacune des bornes (7; 107) de l'électro-aimant (3, 4).

9. Appareil selon la revendication 8, dans lequel lesdites secondes bobines d'inductance (8, 9; 108, 109) sont enroulées sur un noyau commun.

10. Appareil selon l'une quelconque des revendications 2 à 9, dans lequel ledit appareil (1) comprend au moins un amplificateur de classe D.

11. Appareil selon la revendication 10, comprenant en outre un moyen de filtre passe-bas (32) raccordé entre les moyens de commande et ledit au moins un électro-aimant (3).

12. Appareil selon la revendication 10, comprenant en outre un circuit suppresseur (33) raccordé entre les moyens de commande et ledit au moins un électro-aimant (3), afin de supprimer l'effet qu'exercent sur les moyens détecteurs des oscillations résultant des arêtes de commutation des tensions de sortie de l'amplificateur ou de chaque amplificateur de classe D.

13. Appareil selon la revendication 10, dans lequel les moyens détecteurs répondent à une variation desdites oscillations du dispositif de classe D résultant des variations de capacité dudit au moins un électro-aimant.

14. Appareil selon l'une quelconque des revendications précédentes, comprenant en outre au moins un élément électriquement conducteur (15), relié à une bobine (12) dudit au moins un électro-aimant (3).

15. Appareil selon l'une quelconque des revendications précédentes, comprenant en outre un circuit de régulation proportionnel/ intégral/ différentiel destiné à délivrer une tension de sortie pour commander les moyens de mise sous tension.

16. Procédé de réglage d'un entrefer de suspension dans un appareil de suspension électromagnétique (1), le procédé comprenant:
la détection d'une variation de la capacité à la terre d'au moins un électro-aimant (3, 4) de l'appareil, résultant d'une variation de l'entrefer de suspension (d) entre l'électro-aimant (3, 4) et un objet (2) à suspendre; et
la commande de moyens de mise sous tension (5, 6) en réponse à ladite détection, de manière à faire opposition à la variation de l'entrefer de suspension (d).

17. Procédé selon la revendication 16, dans lequel ladite étape de détection comprend l'application d'un signal de courant alternatif à l'un au moins desdits électro-aimants (3, 4), et l'émission d'un signal de sortie dépendant de l'impédance électrique à la terre de l'électro-aimant (3, 4).
